# EUROPEAN PATENT SPECIFICATION

(11) **EP 3 225 352 B1**
(45) Date of publication and mention of the grant of the patent: **19.08.2020**
(21) Application number: 17162643.5
(22) Date of filing: 23.03.2017
(51) Int. Cl.: B23K 103/18, C04B 37/02, B23K 35/30, B23K 35/02, C22C 19/05, B23K 101/00, F01D 5/00, B23P 6/04

(54) **EUTECTIC BRAZING COMPOSITIONS, AND RELATED PROCESSES AND DEVICES**
EUTEKTISCHE LÖTZUSAMMENSETZUNG UND ZUGEHÖRIGE VERFAHREN UND VORRICHTUNGEN
COMPOSITIONS DE BRASAGE EUTECTIQUE ET DISPOSITIFS ET PROCÉDÉS ASSOCIÉS

(30) Priority: 30.03.2016 IN 201641010951
(43) Date of publication of application: 04.10.2017
(73) Proprietor: General Electric Company, Schenectady, NY 12345 (US)
(72) Inventor: ADHARAPURAPU, Raghavendra Rao, 560066 Bangalore, Karnataka (IN); KUMAR, Sundeep, 560066 Bangalore, Karnataka (IN)
(74) Representative: Dennemeyer & Associates S.A.

(56) References cited:
- US-A1- 2009 159 645
- US-A1- 2013 224 561
- US-A1- 2014 069 988
- US-A1- 2014 110 460

## Description

### TECHNICAL FIELD

This disclosure relates to machines and devices formed from metallic and ceramic components. In some particular embodiments, the invention relates to methods for joining and sealing various structures in the machines or devices, e.g., structures within electrochemical devices.

### BACKGROUND OF THE INVENTION

Many types of machines and devices include components made of diverse materials, such as metals, plastics, and ceramics. Examples include lighting devices; power equipment, e.g., gas turbine engines; pumps used in oil and gas exploration; spectroscopic equipment (e.g., gamma-ray detectors) and medical equipment, such as X-ray devices. As another illustration, electrochemical devices such as batteries and fuel cells include various metal and ceramic structures. These structures often need to be joined to each other - often in a way that provides a seal on or within the particular device. Brazing is a widely-used joining method suitable for many of these applications.

The gas turbine engines mentioned above are used in a variety of advanced military and commercial aircraft, as well as power generation plants. The engines often include ceramic and metal components that need to be joined together, in both the engine's "hot section" (turbine and combustion chambers); as well as the "cold section", e.g., the air inlet and compressor. In addition to the requirement to meet high-temperature service, e.g., at least 750°C, the various metal-ceramic joints need to be very strong and durable.

As those skilled in the art understand, metal-ceramic brazing has long been a difficult task. First, it is very difficult for the brazing alloy melt to wet the ceramic surface during the brazing operation. Second, the difference in the thermal expansion coefficient (CTE) between the metal and ceramic joined, as well as the CTE difference between the ceramic and the filler metal, can weaken or damage the braze joint during operation of the components.

The challenges in joining metals to ceramics are found in many other structures and devices, in addition to gas turbine engines. Examples include medical devices such as X-ray instruments. Other examples include oil and gas drilling and exploration equipment.

Energy storage devices such as batteries may also include adjacent components formed of ceramic and metal materials. Specific examples include high-temperature "thermal" electrochemical devices, such as sodium/metal halide and sodium sulfur batteries. The ceramic components often include an electrically insulating alpha-alumina collar, and an ion-conductive electrolyte beta-alumina tube, and are generally joined or bonded via a sealing glass. The metal components usually include a metallic casing, current collector components, and other metallic components which are often joined by welding or thermal compression bonding (TCB). While mechanisms for sealing these components are currently available, their use can sometimes present some difficulty, e.g., due to the CTE mismatches described above.

Since metal-to ceramic bonding is most critical for the reliability and safety of the cells for high-temperature batteries, many different types of seal materials and sealing processes have been considered for joining such components, including ceramic adhesives, brazing, and sintering. However, most of the seals may not withstand high temperatures and corrosive environments. A common bonding technique involves multiple steps of metalizing the ceramic component, followed by bonding the metallized ceramic component to the metal component using thermal compression bonding (TCB). While the method is sometimes useful, it is relatively expensive, and complicated, in view of the multiple processing steps, and the difficulty in controlling the processing steps.

The concept of "active brazing" has become more popular in recent years, for joining a ceramic to a metal, or a ceramic to a ceramic. Active brazing uses an active metal element that promotes wetting of a ceramic surface, enhancing the capability of providing a hermetic seal. An "active metal element", as used herein, refers to a reactive metal that has high affinity to the oxygen within the ceramic, and thereby reacts with the ceramic.

A braze alloy containing an active metal element can also be referred to as an "active braze alloy." The active metal element undergoes a reaction with the ceramic, when the braze alloy is in a molten state, and leads to the formation of a thin reaction layer on the interface of the ceramic and the braze alloy. The thin reaction layer allows the braze alloy to wet the ceramic surface, resulting in the formation of a ceramic-ceramic or a ceramic-metal joint/bond, which may also be referred to as an "active braze seal."

A number of active braze alloy compositions have been developed recently. In the situation where a nickel metal component is being joined to a ceramic, the braze composition usually includes nickel. An active metal like titanium or zirconium is also present, along with a melting point depressant like silicon or boron. These types of braze alloys have been used to successfully join ceramics to metals. They can also be used as joint materials for components that are exposed to high temperatures, e.g., greater than 300°C. US 2013/224561 A1 discloses a braze alloy composition for sealing a ceramic component to a metal component in an electrochemical, comprising nickel, germanium, and an active metal element. US 2009/159645 A1 discloses various braze alloy compositions including a boron-free, high-temperature braze alloy comprising selected amounts of chromium, hafnium, and nickel.

However, in some applications, the braze compositions exhibit substantial drawbacks. For example, the presence of silicon can lead to the formation of hard, brittle intermetallic phases in the braze joint, and at the interfaces between a substrate and the braze. In some cases, the brittle silicide phases can lower the strength of the braze joint. They can also promote an uneven distribution (e.g., Weibull distribution) of joint strength across a dimension of the joint. Such a variation in joint strength may require additional inspection and testing of the joint, which can result in greater material- and processing costs.

With these considerations in mind, it may be desirable to develop new braze alloy compositions that have properties and characteristics that meet the performance requirements for joining ceramic-metal or ceramic-ceramic structures. More specifically, the new compositions should be free of silicide-based brittle phases. The compositions should also exhibit a high level of strength at elevated temperatures that are prevalent for end uses such as gas turbine engines and thermal batteries.

In some cases, the braze alloy compositions must also result in a sealing structure that is very compatible with attached devices. For example, the overall braze structure used in a thermal battery must be compatible with battery contents that may come into contact with the braze. Furthermore, it would also be desirable if the sealing structures can be obtained with relatively low fabrication costs, e.g., as compared to some of the metallization/TCB processes used in some conventional applications.

### SUMMARY

Embodiments of this invention are directed to a braze alloy composition, comprising:
- a) nickel; or a combination of nickel and cobalt;
- b) about 2% by weight to about 30% by weight germanium; and
- c) about 1% by weight to about 5% by weight boron;
   ∘ wherein the composition is free of silicon.

Braze alloy joints formed of the braze alloy composition, and located in various devices, structures, and machines, represent another embodiment of the invention.

### DESCRIPTION OF THE FIGURES

- FIG. 1 is a schematic view showing a cross-section of an electrochemical cell, according to some embodiments of this invention.
- FIG. 2 is a cross-sectional depiction of a vertical crack within a portion of a gas turbine blade.

### DETAILED DESCRIPTION OF THE INVENTION

It should be noted that when introducing elements of various embodiments of the present invention, the articles "a," "an," "the," and "said" are intended to mean that there are one or more of the elements, unless otherwise indicated. The terms "comprising," "including," and "having" are intended to be inclusive, and mean that there may be additional elements other than the listed elements. Moreover, the weights of all constituents are expressed as a percentage of the total weight of the material, e.g., of the braze alloy, unless otherwise specified.

As used herein, the term "and/or" includes any and all combinations of one or more of the associated listed items. Unless otherwise indicated herein, the terms "disposed on", "deposited on" or "disposed between" refer to both direct contact between layers, objects, and the like, or indirect contact, e.g., having intervening layers therebetween.

Approximating language, as used herein throughout the specification and claims, may be applied to modify any quantitative representation that could permissibly vary, without resulting in a change in the basic function to which it may be related. Accordingly, a value modified by a term such as "about" is not limited to the precise value specified. In some instances, the approximating language may correspond to the precision of an instrument for measuring the value.

It may be helpful to provide a brief description of some of the terms used in this disclosure. As used herein, the term "liquidus temperature" generally refers to a temperature at which an alloy is transformed from a solid into a molten or viscous state. The liquidus temperature specifies the maximum temperature at which crystals can coexist with the melt in thermodynamic equilibrium. Above the liquidus temperature, the alloy is homogeneous, and below the liquidus temperature, an increasing number of crystals begin to form in the melt with time, depending on the particular alloy. Generally, an alloy, at its liquidus temperature, melts and forms a seal between two components to be joined.

The liquidus temperature can be contrasted with a "solidus temperature". The solidus temperature quantifies the point at which a material completely solidifies (crystallizes). The liquidus and solidus temperatures do not necessarily align or overlap. If a gap exists between the liquidus and solidus temperatures, then within that gap, the material consists of solid and liquid phases simultaneously (like a "slurry").

"Sealing" is a function performed by a structure that joins other structures together, to reduce or prevent leakage through the joint between the other structures. The seal structure (e.g., various collar and ring structures as exemplified herein) may also be referred to as a "seal" or "joint" herein, for the sake of simplicity. In the present instance, the ceramic and metal components that can be sealed to each other are sometimes part of at least one thermal battery structure selected from the group consisting of electrode compartments; sealing collar structures, sealing ring structures, and electrical current collectors, as further described below.

Typically, "brazing" uses a braze material (usually an alloy) having a lower liquidus temperature than the melting points of the components (i.e. their materials) to be joined. The braze material is brought slightly above its melting (or liquidus) temperature while protected by a suitable atmosphere. The braze material then flows over the components (known as wetting), and is then cooled to join the components together.

In most embodiments of the present invention, the braze alloy composition is a nickel-based alloy, or a nickel-cobalt based alloy. In other words, the alloy contains a relatively high amount of nickel or a combination of nickel and cobalt. In the case of a combination of the two metals, the ratio of nickel to cobalt is usually in the range of about 20 : 1 to about 1 : 1, by weight.

Most often, the braze alloy composition is nickel-based. Nickel is relatively inert in a corrosive environment (when present), as compared to other known base metals, e.g. copper and iron. Additionally, it is observed that nickel may enhance other properties of the braze alloy, such as the thermal expansion coefficient, and the phase stability. In general, the amount of nickel that is present depends on the amounts of the other constituents. In some embodiments of this invention, a suitable level for the amount of nickel may be at least about 20 weight percent, based on the total weight of the braze alloy. In some embodiments, nickel is present in an amount greater than about 50 weight percent. For selective end-use applications, nickel is often present from about 60 weight percent to about 90 weight percent, and in some specific embodiments, from about 70 weight percent to about 80 weight percent, based on the total weight of the braze alloy.

The braze alloy composition further comprises germanium. In the case of nickel-based compositions, the presence of germanium can be important in ensuring the formation of nickel-germanium binary alloys. The binary alloys generally exhibit good strength and ductility, as well as good phase stability at high temperatures.

Moreover, germanium can function as a melting point depressant. Nickel-based alloys may have a liquidus (or melting) temperature that is too high for many end uses. For example, the flow properties of the braze relative to surfaces being joined may be adversely affected due to an excessive liquidus temperature. The present inventors contemplate the addition of germanium in the disclosed types of nickel alloys to effectively lower the liquidus temperature to a desired level.

The amount of germanium present will depend on a number of factors, such as the identity of the base element(s) in the alloy; and the intended end use for the braze material. Usually, germanium is present at about 2% by weight to about 30% by weight of the alloy. In some specific embodiments, germanium is present at about 5% by weight to about 25% by weight of the alloy, and in some cases, about 8% by weight to about 20% by weight. Moreover, in some especially-preferred embodiments, the amount of germanium is about 10% by weight to about 18% by weight. Care is usually taken to ensure that the amount of germanium that is present is not high enough to make the alloy become undesirably brittle.

The braze alloy composition further comprises boron. Boron is essential for enhancing some of the properties of the presently-described nickel-based compositions. As a key illustration, boron can be used to desirably modify the flow properties of the alloys, while also aiding the formation of metallic glass at high rates of cooling or solidification. Boron can also often be used without forming problematic intermetallic brittle phases.

The amount of boron present will depend on a number of factors, such as the type of primary metal in the braze (e.g., nickel alone or in an alloy with cobalt); the required liquidus temperatures and flow properties for the braze material; and the contemplated end use for the material. Usually, the level of boron will be in the range of about 1% by weight to about 5% by weight. In some preferred embodiments, the level is about 1.5% by weight to about 3.5% by weight. When the braze material is used for repairing nickel-based superalloy components, or for joining such alloys to ceramic components, the level of boron is often not greater than about 3.2% by weight. Greater amounts of boron can sometimes diffuse into the nickel component, and can form brittle boride compounds that can, in turn, embrittle the overall braze material.

It is important that braze compositions of the present invention be free of silicon. Its presence could lead to the formation of hard, brittle intermetallic binary and ternary phases in the braze joint, and at the interfaces between a substrate and the braze material. For applications that require very high braze strengths, and/or involve use at high temperatures (e.g., above about 300°C, and sometimes above about 1000°C), the presence of the brittle intermetallic phase (or multiple phases) can lower the strength of the braze, and in some cases, can result in joint failure. As used herein, "free of silicon" is meant to indicate that, at most, impurity levels of the element may be present, e.g., less than about 0.1% by weight, or as an impurity in germanium metal used for braze alloy manufacturing.

In other instances, the compositions of the present invention should be substantially free of certain other elements as well (again, 0.1 % by weight or less for each). They include at least one of copper, manganese, silver, gold, platinum, palladium, gallium, tin, and lead. While such elements may sometimes be desirable and even required in some braze compositions, their presence for most end uses (although not all end uses) contemplated herein can have an adverse effect. As an example, for embodiments related to sodium-based thermal batteries (e.g., sodium nickel halide batteries), some embodiments require the exclusion of silver and gold. Other embodiments require the exclusion of silver, gold, gallium, tin, and lead. Moreover, other embodiments for the sodium-based batteries require the exclusion of copper, and especially the exclusion of pure copper metal, due to possible, undesirable reactions with halides in the cathode of the battery. Furthermore, in some cases, the braze alloy composition is also free of at least one of antimony, strontium, and beryllium.

Some embodiments of the present invention also include chromium, which can be an important constituent. Chromium plays a key role in environmental resistance, e.g., resistance to "hot corrosion", mixed-gas attack, and mechanical damage, like erosion. Chromium can also be important for enhancing the high temperature strength of the braze, and its inherent oxidation resistance.

The level of chromium (when present) is based on a number of factors, including the environment in which the braze material will be employed, as well as the relative amounts of nickel, cobalt and refractory element(s) that are present. (The last-mentioned are discussed below). Usually, the level of chromium is about 1 % to about 25% (and sometimes, about 10%-25%), based on the weight of the braze composition. In some other specific embodiments, the level is in the range of about 5% to about 17% by weight. In some especially preferred embodiments--especially when joining components within a sodium-metal halide thermal battery, the level of chromium is in the range of about 6% to about 10%. Moreover, in some embodiments, iron may be present, usually at about 1% by weight to about 7% by weight.

Many of the embodiments of this invention call for the inclusion of a refractory element selected from niobium, molybdenum, tungsten, tantalum, or various combinations thereof. The refractory element is especially useful for providing strength and high-temperature resistance for the braze. A refractory element like niobium can also provide good corrosion-resistance in a sodium-containing environment, e.g., for sodium-based thermal batteries. In some instances, the refractory element is niobium, or a combination of niobium and tantalum.

The level of the refractory element (when present) will depend on a number of factors, most of which are set forth above. Usually, the braze alloy will contain about 0.25% by weight to about 10% by weight (total) of the refractory element, and sometimes, about 0.5-7% by weight. Greater amounts of refractory elements like niobium can in some cases result in the formation of brittle intermetallic phases, which are undesirable, as described previously.

In some cases, aluminum is present in the braze composition. The presence of aluminum can increase the amount and strength of the gamma prime precipitate - an important phase for the overall braze material microstructure. When present, the level of aluminum is usually in the range of about 0.2% by weight to about 4% by weight.

However, in other embodiments of the invention, aluminum should not be present. One end use in which aluminum is problematic would be a braze joint located in a section of a sodium-based thermal battery that would expose the braze to a corrosive agent. It may be desirable in those instances to ensure that no aluminum is present, except for, possibly, trace impurities, e.g., less than about 0.1% by weight.

The braze alloy compositions of this invention rely on the mechanism of "active brazing", as discussed above. The thin reaction layer formed between the ceramic and metal surface allows the braze alloy to wet the ceramic surface, resulting in the formation of a ceramic-ceramic or a ceramic-metal joint/bond, referred to as the active braze seal. Thus, an active metal element is an essential constituent of a braze alloy for employing active brazing.

A variety of suitable active metal elements may be used to form the active braze alloy. The selection of a suitable active metal element mainly depends on the chemical reaction with the ceramic (e.g., alumina) to form a uniform and continuous reaction layer, and the capability of the active metal element (e.g., as measured by the Gibbs free energy of formation) to form an alloy with a base alloy. (In this instance, the base alloy is nickel with chromium and selected refractory elements, as discussed below).

In terms of cost, availability, and performance, the active metal element for embodiments herein is often titanium. However, for other embodiments, zirconium is preferred; and in some cases, hafnium is preferred. Under certain conditions and for different types of "mating" surfaces, each of these elements might be especially suitable for diffusing into and reacting with a ceramic surface during brazing. A semi-continuous or fully continuous transitional layer (i.e., the "reaction layer") provides a wettable surface that has a semi-metallic character. In this manner, a coherent braze joint is formed between the components. In other embodiments, it may sometimes be advantageous to include vanadium as the active metal.

The presence and the amount of the active metal may influence the thickness and the quality of the thin reaction layer, which contributes to the wettability or flowability of the braze alloy, and therefore, the bond strength of the resulting joint. In some embodiments, the active metal is present in an amount no greater than about 10 weight percent, based on the total weight of the braze alloy. A suitable range is often from about 0.5 weight percent to about 5 weight percent. In some specific embodiments (though not all), the active metal is present in an amount ranging from about 1 weight percent to about 3 weight percent, based on the total weight of the braze alloy. The active metal element is generally present in small amounts suitable for improving the wetting of the ceramic surface, and forming the thin reaction layer, for example, less than about 10 microns. A high amount of the active metal layer may cause or accelerate halide corrosion.

Often, the braze alloy composition of this invention is characterized by one of several microstructures. In some embodiments, the microstructure is entirely a single gamma-nickel phase, with at least germanium in solution, at up to 12 percent by weight. In other embodiments, the microstructure comprises a two-phase microstructure, i.e., gamma-nickel and a gamma prime (gamma') Ni3 Ge precipitate. The Ni3 Ge precipitate is found at levels between about 1% by weight and 75% by volume, and preferably, between about 30% by volume and 60% by volume. The precipitate has a linear size between about 0.1 micron and 5 microns, with a preferred range between about 0.4 micron and 1 micron. In still other embodiments, the microstructure comprises borides of nickel, chromium, and other metal refractory elements, such as those described previously. The metal boride phases would comprise about 1% to 35% of the volume fraction of the overall material.

The braze composition of this invention can be used to join ceramics to other ceramic materials, but is most often used to join ceramics to metals. The metal component can be formed of a variety of materials. Non-limiting examples include nickel, cobalt, niobium, molybdenum, tungsten, iron, nickel-cobalt ferrous alloys (e.g., Kovar® alloys), mild steel, stainless steel, and various alloys of any of the foregoing.

A variety of ceramic materials can be used in embodiments of this invention, i.e., for joining to another ceramic or a metal. Non-limiting examples include zirconia and zirconia-based materials (e.g., yttria-stabilized zirconia), alumina (e.g., alpha alumina), aluminum nitride, silicon carbide, porcelain, titanium carbide, silica (e.g., glass), ceramic matrix composites (CMC's), magnesium aluminate spinel, magnesium oxide, and silicon nitride, as well as many alloys of such materials. The ceramic can also be a "MAX" phase material of the formula Mn+1 AXn , where n is 1-3, M is an early transition metal, e.g., scandium, titanium, vanadium, chromium, zirconium, niobium, molybdenum, hafnium, or tantalum; A is cadmium, aluminum, gallium, indium, thallium, silicon, germanium, tin, lead, phosphorus, arsenic, or sulfur; and X is carbon or nitrogen. An example of such a material is Ti3 SiC2 . The ceramic component can also be formed of an ultra-high temperature ceramic (UHTC), such as the MXy family of materials, where M is a transitional metal, and X can be carbon, boron, or nitrogen. The ceramic materials can include monolithic UHTC or CMC's, or MMC's (metal matrix composites).

As also alluded to previously, metal-ceramic structures in electrochemical devices can be successfully joined with the braze compositions of this invention. One example is a thermal battery, e.g., a sodium-based rechargeable battery that typically operates at temperatures above about 250°C. Typical structures within such batteries that may involve ceramic-metal attachments include electrode compartments; sealing collar structures, sealing ring structures, and electrical current collectors.

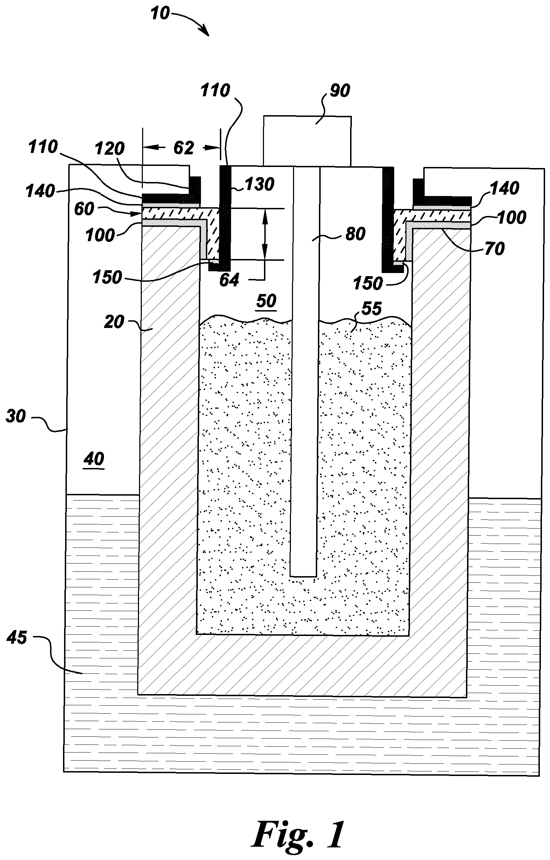

FIG. 1 is a schematic diagram depicting an exemplary embodiment of a sodium-metal halide battery cell 10. The cell 10 has an ion-conductive separator tube 20 disposed in a cell case 30. The separator tube 20 is usually made of β-alumina or β"-alumina. The tube 20 defines an anodic chamber 40 between the cell case 30 and the tube 20, and a cathodic chamber 50, inside the tube 20. The anodic chamber 40 is usually filled with an anodic material 45, e.g. sodium. The cathodic chamber 50 contains a cathode material 55 (e.g. nickel and sodium chloride), and a molten electrolyte, usually sodium chloroaluminate (NaAlCl4).

An electrically insulating ceramic collar 60, which may be made of alpha-alumina, is situated at a top end 70 of the tube 20. A cathode current collector assembly 80 is disposed in the cathode chamber 50, with a cap structure 90, in the top region of the cell. The ceramic collar 60 is fitted onto the top end 70 of the separator tube 20, and is sealed by a glass seal 100. In one embodiment, the collar 60 includes an upper portion 62, and a lower inner portion 64 that abuts against an inner wall of the tube 20, as illustrated in FIG. 1 .

In order to seal the cell 10 at the top end (i.e., its upper region), a metal ring 110 is sometimes disposed. The metal ring 110 has two portions; an outer metal ring 120 and an inner metal ring 130, which are joined, respectively, with the upper portion 62 and the lower portion 64 of the ceramic collar 60, by means of the active braze seals 140 and 150. (It should be apparent that in some embodiments, two separate metal rings are employed). The active braze seal 140, the seal 150, or both may be formed by using a suitable braze alloy composition described above. The collar 60 and the metal ring 110 may be temporarily held together with an assembly (e.g., a clamp), or by other techniques, until sealing is complete.

The outer metal ring 120 and the inner metal ring 130 are usually welded shut to seal the cell, after joining with the ceramic collar 60 is completed. The outer metal ring 120 can be welded to the cell case 30; and the inner metal ring 130 can be welded to the current collector assembly 80.

The shape and size of the several components discussed above with reference to FIG. 1 are only illustrative for the understanding of the cell structure; and are not meant to limit the scope of the invention. The exact position of the seals and the joined components can vary to some degree. Moreover, each of the terms "collar" and "ring" is meant to comprise metal or ceramic parts of circular or polygonal shape, and in general, all shapes that are compatible with a particular cell design.

The braze alloys described herein; and the active braze seal formed thereof, generally have good stability and chemical resistance within determined parameters at a determined temperature. It is desirable (and in some cases, critical) that the braze seal retains its integrity and properties during several processing steps while manufacturing and using the cell, for example, during a glass-seal process for a ceramic-to-ceramic joint, and during operation of the cell. In some instances, optimum performance of the cell is generally obtained at a temperature greater than about 300°C. In one embodiment, the operating temperature may be in a range from about 270°C to about 450°C. In some embodiments, the glass-seal process is carried out at a temperature of at least about 1000°C.

Ceramic and metal components that need to be joined together are present in a large number of instruments, machines, structures, and devices. Non-limiting examples include lighting devices, automobile parts; and frame-sections and other structures within buildings, e.g., heating and ventilation systems. Other examples include power equipment, e.g., gas turbine engines; as well as pumps, motors, and compressors used in oil and gas exploration, e.g., drilling operations. Medical equipment may include various ceramic and metal structures that also need to be joined with a relatively high degree of joint integrity. An exemplary medical device of this type is an X-ray device.

As mentioned previously, some embodiments of this invention provide a method for joining a first component to a second component by using a braze alloy composition. The method includes the steps of introducing the braze alloy between the first component and the second component to form a brazing structure. (The alloy could be deposited on one or both of the mating surfaces, for example, as also described below). The brazing structure can then be heated to form an active braze seal between the first component and the second component. In one embodiment, the first component includes a ceramic; and the second component includes a metal. (The braze alloy composition is as described previously). The braze alloy may be employed as a foil, a sheet, a ribbon, a preform, or a wire, or may be formulated into a paste containing water and/or organic fluids.

The brazing temperature and the brazing time may influence the quality of the active braze seal. The brazing temperature is generally less than the melting temperatures of the components to be joined, and higher than the liquidus temperature of the braze alloy. Very often, the melting point of the braze alloy is between about 1000°C and 1350°C, and in some cases, between about 1050°C and 1300°C. In one preferred embodiment for many of the end uses described herein, the melting point is between about 1100°C and 1250°C. The braze joint re-melt temperature can be at least 100°C-200°C higher than the braze alloy melting temperature. In one embodiment, the brazing temperature ranges from about 1000°C to about 1350°C, for a time period of about 1 minute to about 60 minutes. Other details regarding the braze process are set forth in a number of references, including U.S. Patent Application 2013/0315659 A1, S. Kumar et al, published on November 28, 2013 , and incorporated herein by reference.

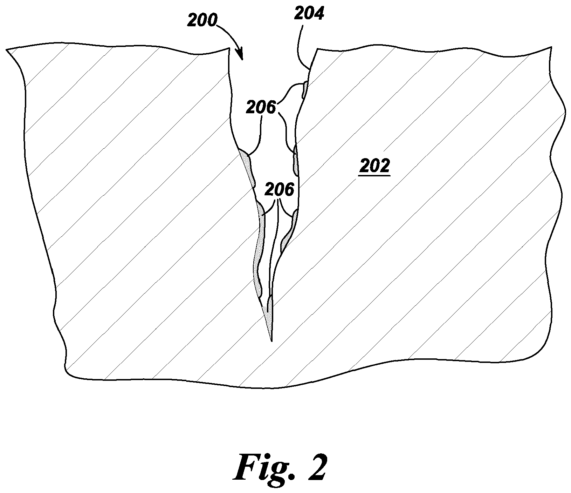

Another embodiment of the invention is directed to the use of the braze alloy composition as a repair material. As a non-limiting example, the braze could be used to repair a crack or other type of defect in any type of metal component, such as a turbine blade. (The crack can be non-oxidized, partially-oxidized, or fully-oxidized). Very often, such blades are made from nickel-based alloys, and are used in turbine engines that operate at very high temperatures. Due to the rigorous operating conditions, the blades can develop thermal-mechanical fatigue cracks. FIG. 2 depicts, in simple form, a vertical crack 200 within a portion of a turbine blade 202.

In a typical repair process, protective coatings (not shown in FIG. 2) covering the blade surface are first removed, and the crack or other type of hole or depression is filled with a suitable crack repair-material. Prior to filling the crack, the interior surfaces often must be cleaned thoroughly, so as to remove oxides or other impurities that might inhibit deposition and adhesion of the repair material. A number of cleaning techniques can be used to clean the crack surfaces 204. One example is fluoride ion cleaning (FIC), which can often remove attached or embedded oxide materials 206 of aluminum, titanium, chromium, tantalum, as well as spinels, for example. However, cleaning techniques of this type may not always be able to remove oxide materials from the crack surfaces 204.

The braze compositions of the present invention can be used successfully to fill the cracks 200. At its liquidus temperature, the braze material can "latch" onto the oxide materials 206 remaining in the crack due to the active element(s), while also tightly adhering to the surrounding metal surfaces 204. The high-temperature integrity of the braze material, as described above, can provide a very durable repair solution for a turbine blade or other metal component.

An exemplary braze alloy composition was prepared with the constituents shown in Table 1. Individual elements were weighed according to the desired composition. These elements were arc-melted to provide an ingot for each composition. The liquidus temperatures of the sample was measured using Differential Scanning Calorimeter (DSC).

**Table 1**

| Braze Samples | Braze alloy composition (weight percent) | Melting Range |
|---|---|---|
| Alloy | Ni-3.12B-9.8Ge-7.2Cr-3Ti | 995-1056°C |

## Claims

1. A braze alloy composition, comprising:
a) nickel; or a combination of nickel and cobalt;
b) 2% by weight to 30% by weight germanium; and
c) 1% by weight to 5% by weight boron;
wherein the composition is free of silicon.

2. The braze alloy composition of claim 1, wherein the level of germanium is 5% by weight to 25% by weight.

3. The braze alloy composition of claim 1 or 2, wherein the level of boron is 1.5% by weight to 3.5% by weight.

4. The braze alloy composition of any one of claims 1 to 3, comprising at least 20% by weight nickel.

5. The braze alloy composition of claim 4, comprising 60% to 90% by weight nickel.

6. The braze alloy composition of any one of claims 1 to 5, comprising 0.5% to 5% (total) of at least one active metal element, based on the total weight of the composition.

7. The braze alloy composition of claim 6, wherein the active metal element is selected from the group consisting of titanium, zirconium, hafnium, and vanadium.

8. The braze alloy composition of any one of claims 1 to 7, further comprising 1% by weight to 25% by weight chromium, preferably 5% by weight to 17% by weight chromium.

9. The braze alloy composition of any one of claims 1 to 8, further comprising at least one refractory element selected from molybdenum, tungsten, tantalum, and niobium.

10. A braze joint formed of the composition of claim 1, wherein the braze joint material has a microstructure that comprises
a) a full, single gamma nickel-phase, with at least germanium in solution, up to 12% by weight;
b) a two-phase microstructure comprising gamma nickel and gamma prime (gamma') Ni₃Ge, wherein the Ni₃Ge component is a precipitate present at levels between 1% by volume and 75% by volume; and
c) metal boride phases of nickel, chromium, and at least one refractory element, wherein the metal boride phases comprise 1% to 35% of the volume fraction of the braze joint material.

11. A braze joint formed of the composition of claim 1, joining a ceramic component and a metal component.

12. The braze joint of claim 11, wherein the ceramic and metal components are structures joined together in a medical device.

13. The braze joint of claim 11, wherein the ceramic and metal components are structures joined together in a turbine engine.

## Patentansprüche

1. Hartlötlegierungszusammensetzung, umfassend:
a) Nickel; oder eine Kombination aus Nickel und Kobalt;
b) 2 Gew.-% bis 30 Gew.-% Germanium; und
c) 1 Gew.-% bis 5 Gew.-% Bor;
wobei die Zusammensetzung frei von Silicium ist.

2. Hartlötlegierungszusammensetzung nach Anspruch 1, wobei der Germaniumgehalt 5 Gew.-% bis 25 Gew.-% beträgt.

3. Hartlötlegierungszusammensetzung nach Anspruch 1 oder 2, wobei der Borgehalt 1,5 Gew.-% bis 3,5 Gew.-% beträgt.

4. Hartlötlegierungszusammensetzung nach einem der Ansprüche 1 bis 3, umfassend mindestens 20 Gew.-% Nickel.

5. Hartlötlegierungszusammensetzung nach Anspruch 4, umfassend 60 % bis 90 Gew.-% Nickel.

6. Hartlötlegierungszusammensetzung nach einem der Ansprüche 1 bis 5, die bezogen auf das Gesamtgewicht der Zusammensetzung (insgesamt) 0,5 % bis 5 % mindestens eines aktiven Metallelements umfasst.

7. Hartlötlegierungszusammensetzung nach Anspruch 6, wobei das aktive Metallelement ausgewählt ist aus der Gruppe, bestehend aus Titan, Zirkonium, Hafnium und Vanadium.

8. Hartlötlegierungszusammensetzung nach einem der Ansprüche 1 bis 7, ferner umfassend 1 Gew.-% bis 25 Gew.-% Chrom, vorzugsweise 5 Gew.-% bis 17 Gew.-% Chrom.

9. Hartlötlegierungszusammensetzung nach einem der Ansprüche 1 bis 8, ferner umfassend mindestens ein feuerfestes Element, das ausgewählt ist aus Molybdän, Wolfram, Tantal und Niob.

10. Hartlötverbindung, die aus der Zusammensetzung nach Anspruch 1 gebildet ist, wobei das Hartlötverbindungsmaterial eine Mikrostruktur aufweist, die umfasst
a) eine vollständige einzige Gamma-Nickel-Phase mit mindestens Germanium in Lösung bis zu 12 Gew.-%;
b) eine Zwei-Phasen-Mikrostruktur, die Gamma-Nickel und Gamma-Prime-(Gamma')-Ni₃Ge umfasst, wobei der Ni₃-Ge-Bestandteil eine Ausfällung ist, die in Mengen von 1 Vol.-% bis 75 Vol.-% vorliegt; und
c) Metallboridphasen aus Nickel, Chrom und mindestens einem feuerfesten Element, wobei die Metallboridphasen 1 % bis 35 % des Volumenanteils des Hartlötverbindungsmaterials umfassen.

11. Hartlötverbindung, die aus der Zusammensetzung nach Anspruch 1 gebildet ist, wobei sie ein Keramikbauteil mit einem Metallbauteil verbindet.

12. Hartlötverbindung nach Anspruch 11, wobei die Keramik- und Metallbauteile Strukturen sind, die in einer medizinischen Vorrichtung miteinander verbunden sind.

13. Hartlötverbindung nach Anspruch 11, wobei die Keramik- und Metallbauteile Strukturen sind, die in einem Turbinentriebwerk miteinander verbunden sind.

## Revendications

1. Composition d'alliage de brasage, comprenant :
a) du nickel ; ou une combinaison de nickel et de cobalt ;
b) 2 % en poids à 30 % en poids de germanium ; et
c) 1 % en poids à 5 % en poids de bore ;
la composition étant exempte de silicium.

2. Composition d'alliage de brasage selon la revendication 1, dans laquelle le niveau de germanium est de 5 % en poids à 25 % en poids.

3. Composition d'alliage de brasage selon la revendication 1 ou 2, dans laquelle le niveau de bore est de 1,5 % en poids à 3,5 % en poids.

4. Composition d'alliage de brasage selon l'une quelconque des revendications 1 à 3, comprenant au moins 20 % en poids de nickel.

5. Composition d'alliage de brasage selon la revendication 4, comprenant 60 % à 90 % en poids de nickel.

6. Composition d'alliage de brasage selon l'une quelconque des revendications 1 à 5, comprenant 0,5 % à 5 % (total) d'au moins un élément métallique actif, sur la base du poids total de la composition.

7. Composition d'alliage de brasage selon la revendication 6, dans laquelle l'élément métallique actif est choisi dans le groupe comprenant le titane, le zirconium, le hafnium et le vanadium.

8. Composition d'alliage de brasage selon l'une quelconque des revendications 1 à 7, comprenant en outre 1 % en poids à 25 % en poids de chrome, de préférence 5 % en poids à 17 % en poids de chrome.

9. Composition d'alliage de brasage selon l'une quelconque des revendications 1 à 8, comprenant en outre au moins un élément réfractaire choisi parmi le molybdène, le tungstène, le tantale et le niobium.

10. Joint de brasage formé à partir de la composition de la revendication 1, dans lequel le matériau de joint de brasage présente une microstructure qui comprend
a) une seule phase gamma-nickel complète, avec au moins du germanium en solution, jusqu'à 12 % en poids ;
b) une microstructure biphasique qui comprend une phase gamma-nickel et une phase gamma prime (gamma') Ni₃Ge, le composant Ni₃Ge étant un précipité présent à des niveaux compris entre 1 % en volume et 75 % en volume ; et
c) des phases de borure métallique de nickel, de chrome et d'au moins un élément réfractaire, les phases de borure métallique constituant 1 % à 35 % de la fraction volumique du matériau de joint de brasage.

11. Joint de brasage formé à partir de la composition de la revendication 1, réunissant un composant céramique et un composant métallique.

12. Joint de brasage selon la revendication 11, dans lequel les composants céramique et métallique sont des structures réunies dans un dispositif médical.

13. Joint de brasage selon la revendication 11, dans lequel les composants céramique et métallique sont des structures réunies dans un turbomoteur.
